# EUROPÄISCHE PATENTANMELDUNG

(11) **EP 2 003 016 A2**
(43) Veröffentlichungstag der Anmeldung: **17.12.2008**
(21) Anmeldenummer: 08001478.0
(22) Anmeldetag: 26.01.2008
(51) Int. Cl.: B60N 2/46

(54) **Höhenverstellbare Armlehne für Kraftfahrzeuge**

(30) Priorität: 12.06.2007 DE 102007027608
(71) Anmelder: BOS GmbH & Co. KG, 73760 Ostfildern (DE)
(72) Erfinder: Röhr, Matthias, 40822 Mettmann (DE); Sitzler, Wolfgang, 42111 Wuppertal (DE); Faber, Wolfgang, 42659 Solingen (DE)
(74) Vertreter: Rüger, Barthelt & Abel Patentanwälte

(57) **Zusammenfassung**

Eine Armauflage ist mit einer Führungs- und einer Antriebseinrichtung versehen. Die Führungseinrichtung sorgt dafür, dass das Armauflagepolster im Wesentlichen ohne Neigungsänderung nach oben und nach unten verstellt werden kann. Die Verstellung erfolgt elektromotorisch mit Hilfe eines selbsthemmenden Schraubspindeltriebs.

## Beschreibung

Für Van's ist es üblich, an der Rücksitzlehne der Vordersitze im Mittenbereich Armlehnen vorzusehen. Die Armlehnen sind an der Rücksitzlehne anscharniert und können in Stufen im Schrägwinkel festgelegt werden um die gewünschte Höhenposition der Armlehne zu erreichen. Bei normelen Pkw-Limousinen ist eine solche Anlenkung von Armlehnen für die Vordersitze nicht möglich. In der Regel ist lediglich zwischen den Sitzen eine Mittelkonsole vorgesehen, die im oberen Bereich gepolstert ist. Eine Höhenverstellung ist auch hier wünschenswert, da nicht alle Fahrer und Beifahrer dieselben Körperabmessungen haben. Wegen des beengten Bauraums ist es hierbei nicht möglich, die Höhenverstellung per Schwenklager durchzuführen.

Ausgehend hiervon ist es Aufgabe der Erfindung eine Armlehne für Kraftfahrzeuge zu schaffen, die sich auch für Seitentüren oder für Mittelkonsolen eignet.

Diese Aufgabe wird erfindungsgemäß durch die Armlehnenanordnung nach Anspruch 1 gelöst.

Die neue Armlehnenanordnung weist ein Armauflagepolster auf. In dem Fahrzeug ist ein Basisteil vorgesehen. Wenigstens eine Führungsanordnung verbindet das Armauflagepolster mit dem Basisteil. Die Führungsanordnung ist so gestaltet, dass sie das Armauflagepolster in einer Weise bewegt, dass das Armauflagepolster seinen Winkel gegenüber der Horizontalen nahezu nicht verändert. Um die Höheneinstellung des Armauflagepolsters zu erreichen, ist eine Schraubspindelanordnung vorgesehen, die sich zwischen dem Armauflagepolster und dem Basisteil erstreckt. Die Schraubspindelanordnung ist selbsthemmend, damit eine einmal eingestellte Höhe auch bei Belastung des Armauflagepolsters sich nicht selbsttätig verändert.

Zum Bewegen der Schraubspindelanordnung ist ein Elektromotor vorgesehen, der in bekannter Weise über Tasten im Fahrzeug zu bedienen ist.

Eine derartig gestaltete Armlehnenanordnung kann im Bereich der Mittelkonsole oder auch im Bereich der Seitentüren bei der Innenverkleidung vorgesehen werden. Das Armauflagepolster wird somit als Ganzes in der Höhe verstellt, d.h. auch die Hinterkante erfährt zumindest nahezu dieselbe Höhenverstellung wie die Vorderkante. Bei entsprechender Ausrichtung der Führungsanordnung kann gleichzeitig auch eine gewisse Verstellung in Fahrzeuglängsrichtung erreicht werden, da im Allgemeinen größere Menschen gleichzeitig auch das Armauflagepolster etwas weiter hinten benötigen, verglichen mit kleinen Menschen.

Das Armauflagepolster kann über ein Scharnier mit der Führungsanordnung verbunden sein, damit bei entsprechender Gestaltung der Führungsanordnung und der Schraubspindelanordnung unterhalb des Armauflagepolsters eine Aufnahmetasche im Fahrzeug integriert werden kann.

Die Achse des Scharniers kann parallel zur Fahrzeuglängsachse oder quer dazu verlaufen.

Der Basisteil kann im Bereich zwischen den beiden Vordersitzen angeordnet sein, oder an einer Seitentür.

Im Falle von Mittelkonsolen können zwei Armauflagepolster unmittelbar nebeneinander angeordnet werden, von denen jede erfindungsgemäß ausgestaltet ist.

Die Führungsmittel der Führungsanordnung können vertikal ausgerichtete Führungsschienen umfassen.

Die Führungsanordnung kann wenigstens ein Hubglied umfassen, das auf den Führungsschienen läuft.

Eine besonders robuste Anordnung wird erhalten, wenn das Armauflagepolster mittels zweier Hubglieder bewegt wird, von denen das eine im Bereich des vorderen und das andere im Bereich des hinteren Endes des Armauflagepolsters angeordnet ist.

Das Hubglied kann eine Durchgangsgewindebohrung enthalten.

Wenn die Schraubspindel hinreichend stabil ist und auch stabil genug gelagert ist, kann sie selbst als Führungsschiene dienen.

Die Schraubspindel ist vorzugsweise in dem Basisteil drehbar gelagert. Sie ist in dem Basisteil axial unverschieblich gehaltert.

Zum Antrieb der Schraubspindel oder der mehreren Schraubspindeln kann ein Zahnriemen verwendet werden. Hierzu ist zweckmäßigerweise je mit einer Zahnriemenscheibe versehen.

Der Elektromotor kann als Getriebemotor ausgeführt sein um eine genügende Drehzahlreduktion und Kraftsteigerung zu erhalten.

Besonders platzsparende Verhältnisse ergeben sich, wenn die Achse des Motors parallel zu der Achse der Schraubspindel ausgerichtet ist.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" beziehen sich auf die normale Einbaulage bzw. Terminologie bei Kraftfahrzeugen.
- Fig. 1: zeigt eine perspektivische Ansicht des vorderen Bereiches eines Fahrgastraumes eines PKW.
- Fig. 2: zeigt in vergrößerter Darstellung die Mittelkonsole im unverkleideten Zustand.
- Fig. 3: die Führungs- und Antriebsanordnung der Armauflagepolster in einer perspektivischen Ansicht auf die Rückseite.
- Fig. 4: die Führungs- und Antriebsanordnung nach Fig. 3 in einer Ansicht auf die Vorderseite

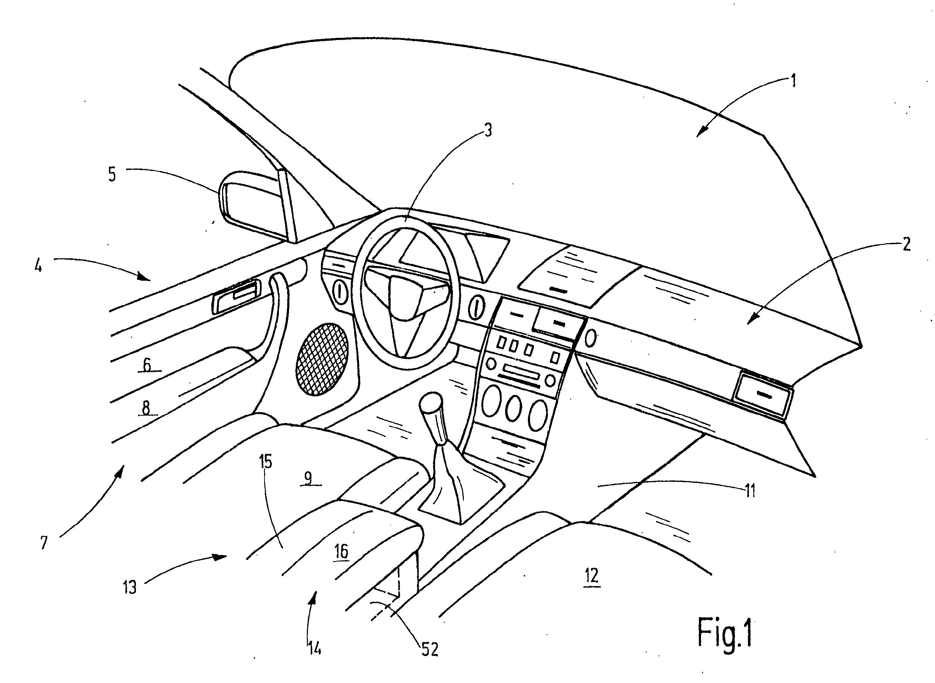

Fig. 1 zeigt in einer perspektivischen Ausschnittsdarstellung den vorderen Fahrgastraum eines PKW. Zu erkennen ist eine Windschutzscheibe 1, unterhalb derer sich ein Armaturenbrett 2 befindet. Vor dem Armaturenbrett ist ein Lenkrad 3 angeordnet. Ferner sieht man eine Innenseite einer linken vorderen Seiten- oder Fahrertür 4 mit außen angeordnetem Spiegel 5 und Innenverkleidung 6. Neben der Innenverkleidung 6 befindet sich eine Seitenarmlehne 7, die nach oben von einem Armauflagepolster 8 abgeschlossen ist. Neben der Innenseite der Fahrertür 4 befindet sich eine Sitzfläche 9 eines Fahrersitzes, der an seiner rechten Seite an eine Mittelkonsole 11 angrenzt. Auf der anderen Seite ist der Mittelkonsole 11 ein Beifahrersitz mit einer Beifahrersitzfläche 12 benachbart. Die Mittelkonsole 11 ist mit zwei Mittelarmlehnen 13 und 14 versehen, von denen Armauflagepolster 15 und 16 zu erkennen sind.

Die Armauflagepolster 15 und 16 sind höhenverstellbar und bezüglich einer Schwenkachse an der Hinterkante jeder Armauflageplsters 15, 16 nach oben schwenkbar.

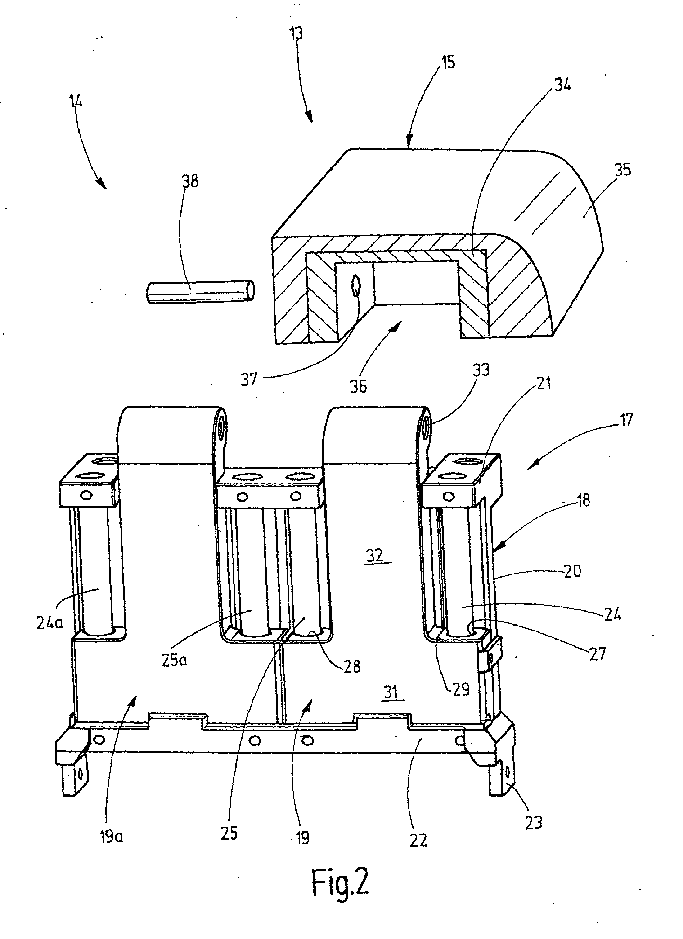

Die Höhenverstellung geschieht, indem das jeweilige Armauflagepolster 15 bzw. 16 ohne Veränderung der Neigung der Auflagefläche aufwärts oder abwärts bewegt wird. Die Maßnahmen die hierzu im Fahrzeug vorgesehen sind, werden nachstehend anhand von Fig. 2 weiter erläutert.

Zu der Armauflage 13 gehört eine Führungeeinrichtung 17 mit einem Basisteil 18 und einem daran vertikal geführten Schlitten 19. Fig. 2 zeigt die Führungseinrichtung 17 in einer Ansicht von vorne. Das Basisteil 18 ist in dem Fahrzeug ortsfest verankert und weist eine vertikal stehende Grundplatte 20 auf, die am oberen Ende mit zwei auf den Betrachter zu zeigenden, d.h. im Fahrzeug nach vorne, zeigenden Fortsätzen 21 versehen ist, die in Querrichtung voneinander beabstandet sind. Die Platte 20 geht am unteren Ende in eine Konsole 22 über, die mittles Laschen 23 in dem Fahrzeug festgeschraubt ist. Die Konsole 22 zeigt in dieselbe Richtung wie die Fortsätze 21. Zwischen der Konsole 22 und den Fortsätzen 21 erstreckt sich je eine Führungssäule 24, 25 in vertikaler Richtung. Die beiden Führungssäulen 24, 25 sind in Querrichtung des Fahrzeugs voneinander beabstandet.

Der Schlitten 19 enthält Führungsbohrungen 27 und 28, mit denen er auf den zylindrischen Führungssäulen 24, 25 klemm- und kippfrei geführt ist. Im Übrigen hat der Führungsschlitten 18 die Gestalt eines etwa quaderförmigen Blocks mit einer Oberseite 29 und einer dem Betrachter zugekehrten glatten Rückseite 31.

Von der Oberseite 29 führt ein Trägerfortsatz 32 nach oben, der freien Ende eine Scharnierlasche bildet und der sich durch die Lücke hindurch bewegen kann, den die voneinander beabstandeten Fortsätze 21 begrenzen. Am oberen Ende enthält der Trägerfortsatz 32 eine parallel zur Fahrzeugquerachse verlaufende Durchgangsbohrung 33, die als Scharnierbohrung für das Armauflagepolster 15 dient.

Die Grundplatte 19 und die Konsole 22 sind in Richtung auf den Beifahrersitz verbreitert, so dass dort ein weiterer Schlitten 19a mit Hilfe von ortsfesten Führungssäulen 24a und 25a geführt ist. Die Anordnung ist spielbildlich und im Übrigen gleich, womit sich eine weitere ausführliche Erläuterung der gezeigten Bauelemente erübrigt.

Das Armauflagepolster 15 ist stark vereinfacht dargestellt. Es ist in der Darstellung in der Nähe des hinteren Endes abgeschnitten, dort wo das Armauflagepolster 15 mit dem Trägerfortsatz verbunden ist. Das Armauflageolster 15 setzt sich aus einem Träger 34 sowie einer beispielsweise geschäumten Polsterung 35 zusammen, die außen und oben auf dem Träger haftet. Der Träger 34 bildet an seiner Unterseite eine Ausnehmung 36. Im montierten Zustand ragt das obere Ende des Trägerfortsatzes 32 in die Ausnehmung 36 hinein soweit, bis dort vorhandene seitliche Querbohrungen 37 mit der Durchgangsbohrung 33 fluchten. Durch die miteinander fluchtenden Bohrungen 33 und 37 führt ein später axial gesicherter Scharnierbolzen 38 hindurch.

Auf diese Weise ist das Armauflagepolster 15 um eine Achse parallel zur Fahrzeugquerachse hochschwenkbar. Es sind Maßnahmen getroffen um das Armauflagepolster 15 daran zu hindern über die horizontale Stellung hinaus nach unten klappen zu können. Diese Maßnahmen sind für das Verständnis der Erfindung nicht von Bedeutung und deswegen nicht dargestellt.

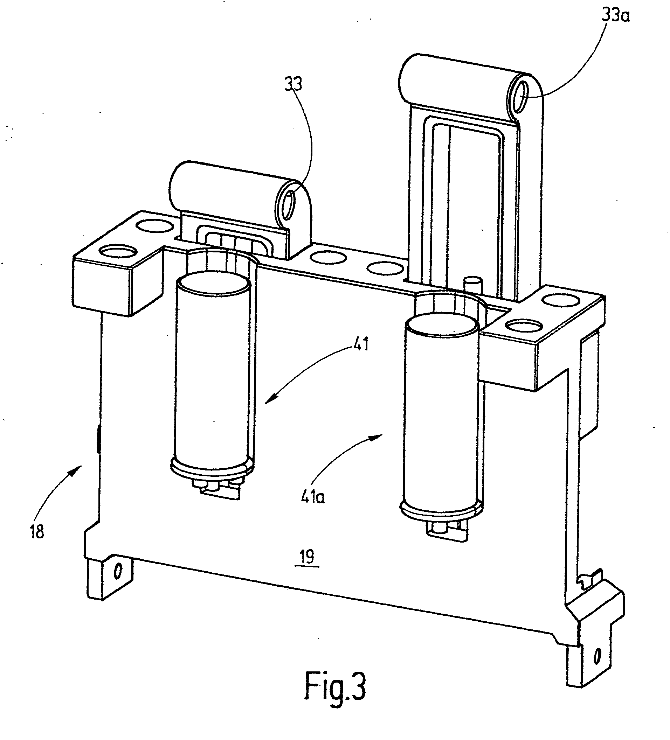

Gemäß Fig. 3 ist für jeden Schlitten 18 bzw. 18a ein eigener Antriebsmotor 41 bzw. 41a vorgesehen. Die Antriebsmotoren 41 und 41a sind Getriebemotoren, deren Längsachsen parallel zu der Längsachse der Führungssäulen 24, 25 bzw 24a und 25a ausgerichtet sind. Die beiden Antriebsmotoren 41 und 41a sind an der Rückseite der Grundplatte 20 des Basisteils 18 vorgesehen.

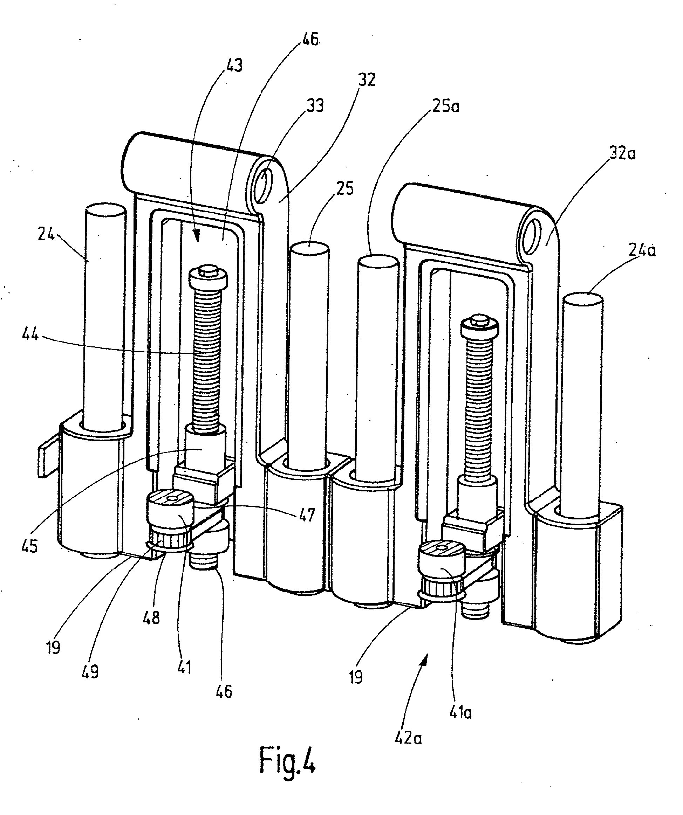

Die Getriebemotoren 41 und 41a sind Bestandteil von Antriebseinrichtungen 42 bzw. 42a, wie sie in Fig. 4 gezeigt sind. Fig. 4 ist stark vereinfacht und zeigt die Anordnung aus demselben Blickwinkel wie Fig. 3, wobei jedoch übersichtlichkeitshalber das gesamte Basisteil 18 weggelassen wurde. Von der Führungsanordnung 17 sind lediglich die jetzt frei stehenden Führungssäulen 24, 25 sowie der Schlitten 19 mit dem daran einstückig vorgesehenen Trägerfortsatz 32 dargestellt. Sinngemäß das Gleiche gilt für die Antriebseinrichtung 42a der Armlehnenanordnung 14.

Der zugehörige Getriebemotor 41 ist abgeschnitten gezeigt.

Zu der Antriebseinrichtung 42 bzw 42a gehört auch eine ein Schraubspindeltrieb 43, 43a. Der Schraubspindeltrieb 43 setzt sich aus einer Schraubspindel 44 und einer Gewindemutter 45 zusammen, die ortsfest innerhalb einer Tasche 46 in dem Trägerfortsatz 43 vorgesehen ist. Die Spindelmutter 45 kann mit dem Trägerfortsatz 32 einstückig sein, oder an diesem als getrenntes Bauteil angeschraubt sein. Die Schraubspindel 44 steht etwa mittig zwischen den beiden Führungssäulen 24 und 25 und ihre Längsachse liegt in der Ebene, die die Längsachsen der beiden Führungssäulen 24 und 25 enthält. Sie steht parallel zu den Führungssäulen 24, 25 und ist wie diese im wesentlichen senkrecht oder ist leicht schräg geneigtausgerichtet.

Die Schraubspindel 44 ist mit ihrem unteren Ende mittels eines Druckkugellagers 46 in der Konsole 22 drehbar gelagert. Das obere Ende kragt fliegend aus, d.h. dort ist kein Lager vorhanden. Aus Platzgründen ist der Trägerfortsatz 32, wie bereits erwähnt, mit der Tasche 46 versehen, so dass in diesem Hohlraum die Schraubspindel 44 Platz findet. Hierdurch entsteht ein sehr geringer Platzbedarf in Fahrzeuglängsrichtung.

Nahe dem unteren Ende sitzt auf der Schraubspindel 44 eine Zahnriemenscheibe 47, die drehfest mit der Schraubspindel 44 verbunden ist. Eine weitere Zahnriemenscheibe 48 steckt drehfest auf der Ausgangswelle des Getriebemotors 41 und beide Zahnriemenscheiben 47, 48 sind durch einen Endloszahnriemen 49 getrieblich miteinander verbunden.

Die Gestaltung für die andere Mittelarmlehne 14 ist sinngemäß in der spiegelbildlichen Weise ausgeführt, wobei die Spiegelungsebene eine Ebene ist, in der die Fahrzeuglängsachse liegt und die senkrecht steht.

Die Funktionsweise der Anordnung ist wie folgt:

In der untersten Position des Armauflagepolsters 15 befindet sich der Schlitten 19 mit dem daran befindlichen Trägervorsatz 32 in seiner untersten Stellung, wie sie in Fig. 3 auf der linken Seite bzw. Fig. 4 gezeigt ist. In dieser Position stößt der Schlitten 19 mit seiner Unterseite auf der Konsole 22 auf. Aufgrund der Scharnierverbindung zwischen dem Trägerfortsatz 32 und dem Armauflagepolster 15 kann der Benutzer in dieser Stellung das Armauflagepolster 15 hochklappen. In der hochgeklappten Stellung zeigt das Armauflagepolster 15 mit seiner Vorderkante mehr oder weniger stark nach oben. Auf diese Weise kann Zugang geschaffen werden zu einer evtl. darunter befindlichen gestrichelt angedeuteten Box 52 (siehe Fig. 1), wie sie für das Armauflagepolster 16 angedeutet ist.

Wenn dem Fahrer oder dem Beifahrer das Armauflagepolster 15 bzw. 16 zu tief steht, kann er durch Betätigung eines entsprechenden Schalterknopfes die Antriebseinrichtung 42 bzw. 42a in Gang setzten. Der jeweilige Antriebsmotor 41 beginnt sich zu drehen und treibt gekuppelt über den Zahnriemen 49 die Zahnriemenscheibe 47 der Schraubspindel 44 an. Die Drehbewegung der Schraubspindel 44 lässt die Spindelmutter 45 längs der Schraubspindel 44 nach oben wandern. Diese Bewegung hält so lange an, wie der Antriebsmotor 41 eingeschaltet ist. In der gewünschten Stellung lässt der Fahrer/Beifahrer den Schalterknopf los und der Antriebsmotor 41 bleibt stehen, womit sich sein Armauflagepolster 15/16 in der gewünschten Höhe befindet.

Das Zusammenwirken aus Schraubspindel 44 mit Spindelmutter 45 und dem Haltemoment des Antriebsmotors 41 blockiert die Antriebseinrichtung 42. Unabhängig von der auf das Armauflagepolster 15 wirkenden Kraft bleibt die eingestellte Position erhalten. Das herunterlassen des Armauflagepolsters geschieht in der sinngemäß umgekehrten Weise.

Bei der gezeigten Anordnung ist die Schraubspindel 44 praktisch frei von Kippmomenten, die in der Führungseinrichtung 18 entstehen, wenn sich der Fahrer auf sein Armauflagepolster 15 bzw. der Beifahrer und sein Armauflagepolster 16 stützen. Die auftretenden Kippmomente werden von dem Armpolster 15 und die nicht weiter gezeigte Anschlageinrichtung auf den Trägerfortsatz 32 übertragen. Von hier folgt die Krafteinleitung in den Schlitten 19, der seinerseits an den Führungsäulen 24, 25 geführt ist.

Es bedarf keiner weiteren zeichnerischen Darstellung um zu verstehen, dass die gezeigte Kombination aus Schraubspindel und Führungssäulen nicht nur im Bereich des hinteren Endes des Armauflagepolsters 15 bzw. 16, sondern auch im Bereich des vorderen Polsters vorgesehen sein kann. In diesem Falle bietet es sich an, das Armauflagepolser 15 bzw. 16 um eine Scharnierachse schwenkbar zu machen, die parallel zur Fahrzeugslängsrichtung liegt und die dem jeweils anderen Armauflagepolster benachbart ist.

Wenn die Schraubspindeln genügend fest sind, besteht auch die Möglichkeit, sie anstelle der Führungssäulen 24 und 25 vorzusehen. In diesem Falle ersetzen sozusagen zwei Schraubspindeln 44 die beiden Führungssäulen 24 und 25 und gleichzeitig sind die Durchgangsbohrungen 27 und 28 als Durchgangsgewindebohrungen ausgebildet. Abweichend von der dargestellten Ausführungsform wären in einem solchen Falle zweckmäßigerweise die Schraubspindeln 44 zusätzlich oben in den Fortsätzen 21 drehbar gelagert.

Auch bei dieser Ausführungsform wird ein einziger Antriebsmotor 41 je Armauflagepolster 14 bzw. 16 verwendet, um sämtliche Schraubspindeln 44 synchron anzutreiben.

Die Erfindung wurde oben stehend anhand einer Mittelkonsole erläutert. Es bedarf ferner keiner weiteren Darstellung um zu verstehen, dass die Führungs- und Antriebsanordnung, wie sie anhand der Figuren 2 bis 4 erläutert ist, auch für das Armauflagepolster 8 an der Innenseite der Tür eingesetzt werden kann.

Eine Armauflage ist mit einer Führungs- und einer Antriebseinrichtung versehen. Die Führungseinrichtung sorgt dafür, dass das Armauflagepolster im Wesentlichen ohne Neigungsänderung nach oben und nach unten verstellt werden kann. Die Verstellung erfolgt elektromotorisch mit Hilfe eines selbsthemmenden Schraubspindeltriebs.

## Patentansprüche

1. Armlehne (13,14) für Kraftfahrzeuge,
mit einem Armauflagepolster (15,16),
mit einem Basisteil (18), das in dem Fahrzeug vorgesehen ist,
mit wenigstens einer Führungsanordnung (17), die das Armauflagepolster (15,16) mit dem Basisteil (18) verbindet,
mit einer Schraubspindelanordnung (43), die sich zwischen dem Armauflagepolster (15,16) und dem Basisteil (18) erstreckt um selbsthemmend den Abstand zwischen dem Armauflagepolster (15,16) und dem Basisteil (18) einzustellen und temporär zu fixieren, und
mit einem Elektromotor (41) zum Antrieb der Schraubspindelanordnung.

2. Armlehne nach Anspruch 1, **dadurch gekennzeichnet, dass** das Armauflagepolster (15,16) über ein Scharnier (32,36) anscharniert ist, derart, dass das Armauflagepolster (15,16) aus einer Betriebsstellung in eine hochgeklappte Stellung bringbar ist.

3. Armlehne nach Anspruch 1, **dadurch gekennzeichnet, dass** die Achse des Scharniers (32,36) parallel oder quer zur Fahrzeugquerachse verläuft.

4. Armlehne nach Anspruch 1, **dadurch gekennzeichnet, dass** das Basisteil (18) sich im Bereich zwischen den beiden Vordersitzen (9,12) befindet.

5. Armlehne nach Anspruch 1, **dadurch gekennzeichnet, dass** das Basisteil (18) an einer Seitentür (4) vorgesehen ist.

6. Armlehne nach Anspruch 1, **dadurch gekennzeichnet, dass** die Führungsanordnung (17) Führungsmittel (24,25) an dem Basisteil (18) umfasst.

7. Armlehne nach Anspruch 1, **dadurch gekennzeichnet, dass** die Führungsmittel an dem Basisteil (18) von wenigstens einer in dem Basisteil (18) angeordneten vertikal ausgerichteten Führungsschiene (254,25) gebildet ist.

8. Armlehne nach Anspruch 1, **dadurch gekennzeichnet, dass** die Führungsanordnung (17) wenigstens ein Hubglied (19,45) umfasst.

9. Armlehne nach Anspruch 1, **dadurch gekennzeichnet, dass** für ein Armauflagepolster (15,16) zwei Hubglieder (45) vorgesehen sind, die sich am vorderen und am hinteren Ende des Armauflagepolsters (15,16) befinden.

10. Armlehne nach Anspruch 1, **dadurch gekennzeichnet, dass** das Hubglied (19,45) an der Führungsschiene (25,26) geführt ist.

11. Armlehne nach Anspruch 1, **dadurch gekennzeichnet, dass** das Hubglied (45) eine Durchgangsgewindebohrung enthält.

12. Armlehne nach Anspruch 1, **dadurch gekennzeichnet, dass** die Durchgangsgewindebohrung zu der Schraubspindelanordnung (43) gehört.

13. Armlehne nach Anspruch 1, **dadurch gekennzeichnet, dass** die Schraubspindelanordnung (43) die Führungsanordnung bildet.

14. Armlehne nach Anspruch 1, **dadurch gekennzeichnet, dass** die Schraubspindelanordnung (43) wenigstens eine Schraubspindel (44) umfasst.

15. Armlehne nach Anspruch 1, **dadurch gekennzeichnet, dass** die Schraubspindel (44) eine Führungssäule bildet.

16. Armlehne nach Anspruch 1, **dadurch gekennzeichnet, dass** die Schraubspindel (44) der Schraubspindelanordnung (43) in dem Basisteil (18) drehbar gelagert ist.

17. Armlehne nach Anspruch 1, **dadurch gekennzeichnet, dass** die Schraubspindel (44) in dem Basisteil (18) axial unverschieblich gehaltert ist.

18. Armlehne nach Anspruch 1, **dadurch gekennzeichnet, dass** auf der Schraubspindel (44) drehfest eine Zahnriemenscheibe (47) sitzt.

19. Armlehne nach Anspruch 1, **dadurch gekennzeichnet, dass** der Elektromotor (41) als Getriebemotor ausgeführt ist.

20. Armlehne nach Anspruch 1, **dadurch gekennzeichnet, dass** auf der Ausgangswelle des Elektromotors (41) oder des Getriebes eine Zahnriemenscheibe (48) sitzt.

21. Armlehne nach Anspruch 1, **dadurch gekennzeichnet, dass** die Achse des Elektromotors (41) parallel zu der Schraubspindel (44) ausgerichtet ist.
